# EUROPEAN PATENT SPECIFICATION

(11) **EP 2 395 268 B1**
(45) Date of publication and mention of the grant of the patent: **26.08.2015**
(21) Application number: 11168754.7
(22) Date of filing: 06.06.2011
(51) Int. Cl.: F16K 7/14

(54) **Valve device for the cleaning of industrial filters**
Ventilvorrichtung zur Reinigung industrieller Filter
Dispositif de soupape pour nettoyer des filtres industriels

(30) Priority: 08.06.2010 IT MO20100167
(43) Date of publication of application: 14.12.2011
(73) Proprietor: Autel S.R.L, 41049 Sassuolo (Prov. of Modena) (IT)
(72) Inventor: Mazzacani, Claudio, 41049 Sassuolo (MO) (IT)
(74) Representative: Brunacci, Marco

(56) References cited:
- WO-A1-02/068850
- DE-A1- 3 444 865
- US-A- 3 011 758
- US-A1- 2007 075 284

## Description

The present invention relates to a valve device for the cleaning of industrial filters.

In the industrial field, the use has been known for some time of special dust abatement systems for air cleaning.

Such systems, in point of fact, enable the dirty air extracted by a plant to be filtered, by trapping the dusts using suitable filtering elements.

In most cases, the filtering elements are composed of so-called "sleeves" or, alternatively, of "cartridges".

The sleeves, in particular, are fabric filters (warp pattern) of different types, depending on the characteristics of the air to be cleaned, and can be composed, e.g., of a series of cylindrical bags positioned side by side and made of material with permeability such as to allow the transit of gas and the trapping of dust and particulate of various kinds.

The cartridges on the other hand are made up of a rigid and suitably shaped filtering material.

Such filtering stations also have one or more devices for cleaning the filtering elements, suitable for periodically intervening to detach the trapped dusts from the filtering elements.

A particular type of such cleaning devices contemplates the injection of compressed air inside the filtering elements, by means of the operation of valves that can be operated by an electric pulse and fitted on a compressed-air storage tank.

The injected compressed air acts in the opposite direction to the normal extracted flow of air to be cleaned and causes a shaking or vibration of the filtering elements, provoking the precipitation of the dusts deposited on the outer surface of the filtering elements themselves.

The precipitated dusts are then collected to be retrieved or rejected.

The valves of known type generally comprise:
- a body closed by a cover and having an air inlet opening, which can be connected to a compressed-air storage tank;
- an air outlet mouth, which can be connected to one of the filtering elements;
- a membrane in a deformable material moving between a closing configuration, in which it is arranged to seal closing a compressed-air transit opening from the inlet mouth to the outlet mouth, and a maximum opening configuration, in which it is moved away from said compressed-air transit opening.

The valves currently on the market use membranes of various conception. Membranes are known that comprise a rubber fabric with textile insert closed between two rigid discs, generally made of steel.

In the valves that use this type of membrane, the opening for the transit of the compressed air is obtained either directly on the fabric, in the flexible area subject to movement, or in the outer area of the membrane closed between the cover and the body of the valve, suitably shaped to allow the transit of the air. Furthermore, these valves comprise a thrust spring suitable for acting on the membrane to keep it or return it to closing configuration.

The fabric-covered membrane in fact has the characteristic of not guaranteeing a perfect adherence in the closing configuration in the following work conditions:
- in case of zero pressure, i.e., at start-up of the plant on which the valves are fitted;
- in all those cases in which the valve is positioned in such a way that, by effect of gravity, it tends to lift up from the compressed-air transit opening.

The thrust spring is therefore used for the purpose of keeping or returning the membrane fast up on the compressed-air transit opening, in the closing configuration.

These valves of known type are not without drawbacks.

In particular, the sudden and repeated movements of the membrane cause the wear of the spring and a gradual reduction of the effectiveness of its thrust. Furthermore, any continuous rubbing of the spring on the sides of its seat, due e.g. to an asymmetry of the compressed-air flow hitting the membrane, can cause it to break.

The use is also known of membranes made of thermoplastic material.

Such membranes can comprise a rigid reinforcement disc which can be integrated in the thermoplastic during moulding or fastened externally after the moulding stage.

The valves which use such type of membrane can contemplate, or not, the use of a thrust spring.

These valves of known type, however, are susceptible to upgrading to improve the effectiveness of the introduced compressed-air flow.

In particular, the valves used are suitable for generating in a short time a large transit of air inside the filtering elements.

The intensity and the duration of the air flow generated by the valves depends mainly on the inner shape of the valve, on the diameter of the compressed-air inlet and outlet mouths and on the stroke of the membrane between the closing configuration and the maximum opening configuration.

Further major aspects for obtaining a flow of compressed air which is effective for the purposes of cleaning the filtering elements consist in the membrane opening time, meant as the time taken by the membrane to switch from closing configuration to maximum opening configuration, and in the membrane closing time, meant as the time taken by the membrane to switch from maximum opening configuration to closing configuration.

More specifically, a longer time taken by the membrane to reach the maximum opening configuration corresponds to a lesser intensity of the introduced compressed air.

A longer time taken by the membrane to return to the closing configuration, instead, corresponds to a greater consumption of compressed air.

During the introduction, in fact, the pressure inside the storage tank tends to drop and, therefore, with long introduction times the air coming out of the valve is increasingly less compressed and increasingly less effective for filtering element shaking purposes.

All the above-listed aspects are susceptible to upgrading.

The document DE 34 44 865 A1 discloses a diaphragm valve comprising a diaphragm clamped in a housing and a permanently flexible filler positioned between a inner wall of the housing and the diaphragm, wherein the filler is suitable for squeezing itself against the inner wall during the movement of the diaphragm from a closing position to an opening position and it is suitable for giving back elastic energy during the movement from the opening position to the closing position.

However, also this known solution is susceptible to upgrading, particularly in order to improve the effectiveness of the introduced compressed-air flow.

The main aim of the present invention is to provide a valve device for the cleaning of industrial filters which, when idle, allows the seal closing of the compressed-air transit opening without the aid of a membrane thrust spring and which, at the same time, allows improving the effectiveness of the introduced compressed-air flow. Another object of the present invention is to provide a valve device for the cleaning of industrial filters with a life cycle longer than that of devices of known type.

Another object of the present invention is to provide a valve device for the cleaning of industrial filters, that allows to overcome the mentioned drawbacks of the state of the art in the ambit of a simple, rational, easy and effective to use as well as low cost solution.

The above objects are achieved by the present valve device for the cleaning of industrial filters, as defined in independent claim 1. Preferred embodiments of the invention are defined in the dependent claims.

Other characteristics and advantages of the present invention will become more evident from the description of a preferred, but not sole, embodiment of a valve device for the cleaning of industrial filters, illustrated purely as an example but not limited to the annexed drawings in which:

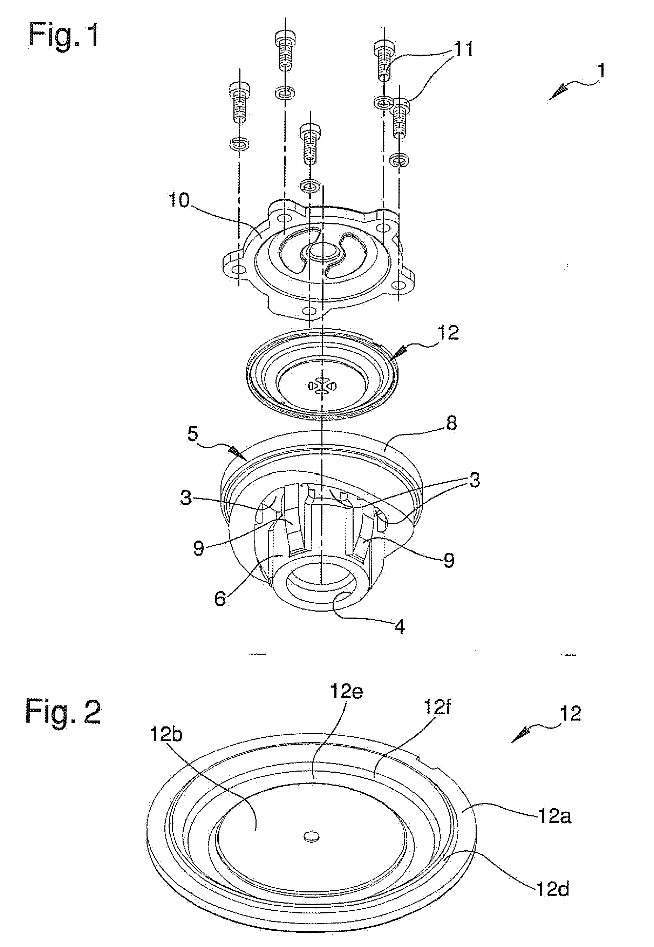

figure 1 is an axonometric and exploded view of the device according to the invention;
figure 2 is an axonometric view of the membrane of the device according to the invention;
figure 3 is a side and section view of the device according to the invention with the membrane arranged in the closing position;
figure 4 is a section view of a detail of figure 3;
figure 5 is a side and section view of the device according to the invention with the membrane arranged in the maximum opening position;
figure 6 is a section view of a detail of figure 5;
figure 7 shows an example of a force-movement graph of the membrane of the device according to the invention.

With particular reference to such figures, globally indicated by I is a valve device for the cleaning of industrial filters; of the type usable in dusts abatement systems for cleaning dirty air suctioned by a system.

The device 1 comprises a body 2 having a plurality of inlet openings 3 for the introduction of the compressed air and an outlet opening 4 for the compressed air to come out.

In particular, the body 2 comprises a support 5 which can be fitted on a compressed-air storage tank, having an inner compartment and a duct 6 extending towards the outside.

The duct 6 has an outer extremity with the outlet opening 4 and an opposite extremity, inside said compartment, having a transit mouth 7 for the compressed air coming from the inlet openings 3.

The inlet openings 3 are made on the support 5, to the side of the duct 6 and turned in the same direction as the outlet opening 4.

The support 5 also comprises a collar 8 which is arranged around the duct 6, coaxially with respect to this, and which is associated with the duct 6 by means of a plurality of ribs 9 arranged in a radial pattern.

The body 2 also comprises a cover 10. fixable to the collar 8 of the support 5 by means of threaded means 11 or the like for closing the compartment.

Different embodiments of the body 2 cannot however be ruled out and nor can a different arrangement of the inlet openings 3, of the outlet opening 4 and of the transit mouth 7.

The device 1 also comprises a membrane 12 made of elastically deformable material housed inside the body 2 and suitable for being controlled by actuator means for closing/opening the transit mouth 7.

Preferably, the membrane is entirely made of thermoplastic material and is obtained by moulding.

The membrane 12 has a substantially disc-shaped conformation and comprises a first face turned towards the transit mouth 7 and a second face substantially opposite the transit mouth 7.

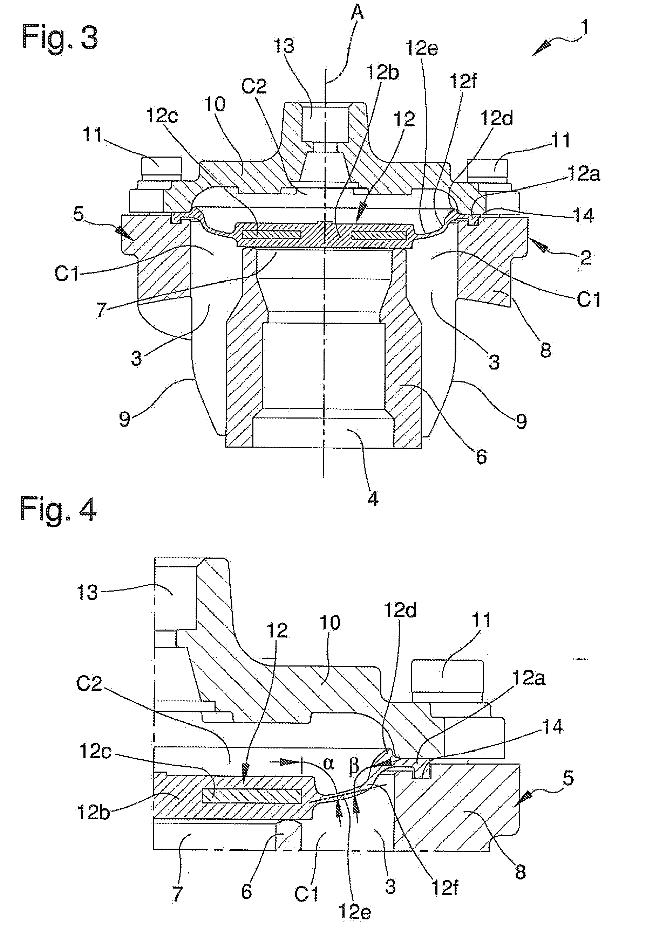

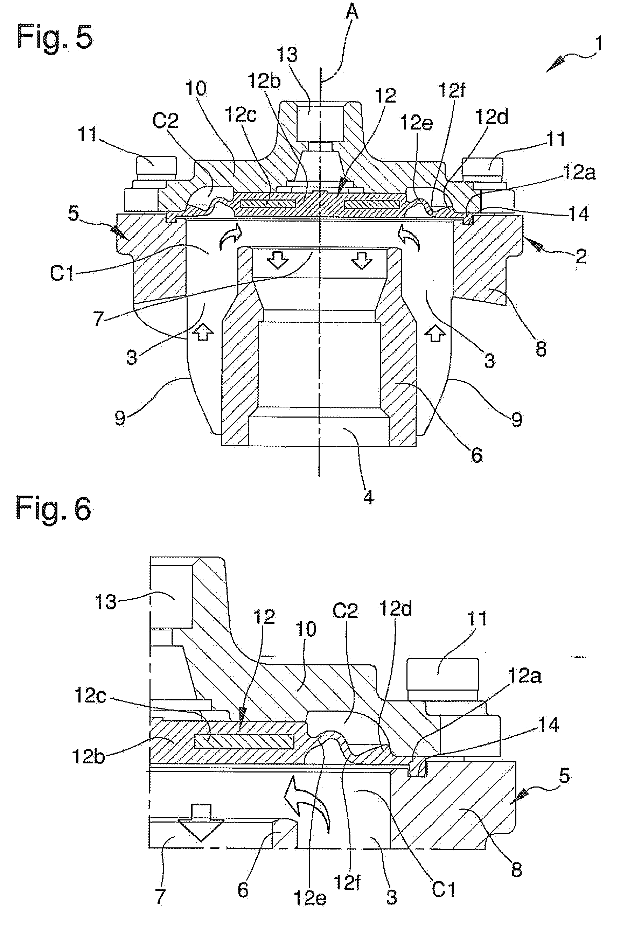

The membrane 12 has a perimeter portion 12a associated integral with the body 2 and a central portion 12b moving between a closing position, wherein it is arranged for the seal closing of the transit mouth 7 (figures 3 and 4), and a maximum opening position, wherein it is arranged spaced from the transit mouth 7 (figures 5 and 6).

The central portion 12b represents the portion of the membrane with the greatest thickness and is made up preferably of a disc in thermoplastic material, if necessary having rigid inserts 12c made of metal or of another material.

The actuator means, which are not represented in the above figures inasmuch as of known type, are arranged in correspondence to the housing 13 on the cover 10, can be of electric or pneumatic type and are suitable for moving the central portion 12b of the membrane between the closing position and the opening position.

With particular and not limitative reference to the embodiment of the device 1 shown in the figures, the perimeter portion 12a of the membrane is suitably shaped and is fitted in a complementary seat 14 made on the edge of the collar 8 of the support 5.

The perimeter portion 12a is locked inside said seat 14 by the cover 10, which is fastened integral to the support 5 in correspondence to the collar 8.

The membrane 12 delimits, inside the body 2, a first chamber C1 having inlet openings 3 and a second chamber C2 operatively associated with the actuator means.

In particular, the actuator means are suitable for changing the pressure inside the second chamber C2, so as to create a pressure difference between the second chamber C2 and the first chamber C1 communicating with the compressed-air storage tank through the inlet openings 3, so as to move the membrane 12 between the closing position and the opening position.

The central portion 12b of the membrane 12 moves between the closing position and the maximum opening position along a substantially straight movement axis A.

Advantageously, the membrane 12 comprises, in the proximity of the perimeter portion 12a, a protruding portion 12d suitable for:
- pressing against the inner surface of the cover 10 and accumulating elastic energy during the movement of the central portion 12b from the closing position to the maximum opening position;
- returning the elastic energy accumulated in the form of thrust during the movement of the central portion 12b from the maximum opening position to the closing position.

Usefully, the protruding portion 12d extends along the entire perimeter of the membrane 12 and has a substantially fin-shaped crosswise section.

In particular, with the central portion 12b arranged in the closing position, the protruding portion 12d extends along the perimeter portion 12a, in the proximity of the inner surface of the cover 10, from the face substantially opposite the transit mouth 7 and inside the second chamber C2.

The protruding portion 12d, during the movement of the central portion 12b from the closing position to the maximum opening position, completes a slight rotation until it comes into contact and presses against the cover 10.

The more the central portion 12b moves towards the maximum opening position, the more the protruding portion 12d squeezes itself and accumulates elastic energy, thereby increasing the thrust contribution for the return of the central portion 12b to the closing position.

Usefully, the rotation of the protruding portion 12d is minimum and the contact with the cover 10 is not such as to create abrasions of the membrane 12. Advantageously, the membrane 12 comprises a flexible sloped portion 12e extending from the central portion 12b towards the perimeter portion 12a and which is suitable for bending during the movement of the central portion 12b from the closing position to the maximum opening position.

In particular, the sloped portion 12e extends along the entire perimeter of the central portion 12b and has a substantially truncated-cone shape.

Preferably, when the central portion 12b is in closing position, the angle a defined between the sloped portion 12e and an axis parallel to the movement axis A is between 65° and 85°.

An angle below 65° excessively increases the rigidity of the membrane 12, while an angle of more than 85° excessively reduces the stroke of the central portion 12b.

Usefully, the sloped portion 12e is substantially concave, with concavity turned towards the second chamber C2.

Such concavity ensures a greater thrust towards the closing position during the first millimetre of stroke and, therefore, helps keep the central portion 12b in the closing position, including after small changes in pressure between the first chamber C1 and the second chamber C2 which could, commonly, cause membrane vibrations.

Advantageously, the membrane 12 comprises a flexible step portion 12f which connects the sloped portion 12e to the perimeter portion 12a and which is suitable for bending during the movement of the central portion 12b from the closing position to the maximum opening position.

The step portion 12f extends along the entire membrane 12, between the sloped portion 12e and the perimeter portion 12a.

Preferably, when the central portion is in the closing position, the angles β defined between the step portion 12f and the sloped portion 12e is between 110° and 130°.

An angle below 110° causes greater stretching on the step portion 12f during the work phase, increasing the possibility of breakages, while angles above 130° tend to cancel the beneficial effect of the step in terms of the stroke of the membrane 12.

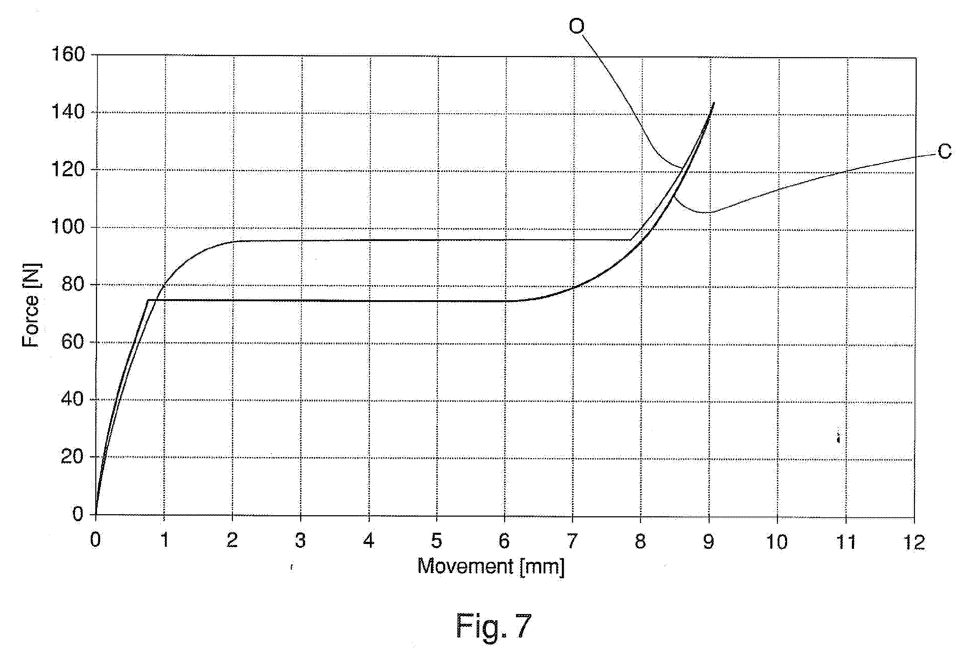

The membrane 12 of the device 1 is such as to allow the achievement of a determinate bond between the applied force and the movement of the membrane itself, described below and shown by way of example only in figure 7.

During the movement of the central portion 12b from the closing position to the maximum opening position, on the membrane 12 an intrinsic force operates in a direction opposite to the direction of movement of the central portion 12b and which constantly grows as the stroke increases.

Such intrinsic force must be preferably concentrated, for at least 50%, in the first millimetre of stroke of the membrane 12.

This way, the membrane 12 is kept in the closing position including for small changes in pressure between the first chamber C and the second chamber C2, avoiding undesired vibrations of the membrane which, besides producing noise, can cause the breakage of the membrane itself.

During the movement of the central portion 12b from the maximum opening position to the closing position on the membrane 12 an intrinsic force operates in the same direction as the direction of movement of the central portion 12b and which always decreases as the stroke is reduced.

The figure 7 shows the opening curve 0 and the closing curve C obtained by applying a force on the membrane 12 (produced by the difference in pressure between the first chamber C1 and the second chamber C2) and measuring the actual movement of the membrane 12 produced by such force.

In particular, the opening curve O is the force-movement graph obtained during the movement of the central portion 12b from the closing position to the maximum opening position, while the closing curve C is the force-movement graph obtained during the movement of the central portion 12b from the maximum opening position to the closing position.

The intrinsic force that operates on the membrane has a logarithmic pattern and, the position of the membrane 12 being the same, is greater during the opening phase than during the closing phase. The closing curve C, therefore, though having the same origin, is positioned below the opening curve O.

A "hysteresis" phenomenon is thus produced, meant as the difference between the opening curve O and the closing curve C, which is due to the viscoelastic behaviour of the thermoplastic material making up the membrane 12 and to the profile of the membrane itself and which must be reduced in order to prevent the membrane 12 blocking in a second position of equilibrium in correspondence to the maximum opening position.

The membrane 12 of the device 1 according to the invention, in particular the presence of the protruding portion 12d, allows keeping a low hysteresis (below 25% compared to the force applied for opening) and therefore avoiding the reaching of the above second position of equilibrium. The presence of the protruding portion 12d also allows achieving the following technical effects:
- keeping the central portion 12b in the closing position in idle conditions and for any orientation of the device 1, including without the help of a thrust spring;
- reducing the stretching of the membrane 12, and therefore extending the life cycle of the membrane itself and of me device 1;
- avoiding collisions between the membrane 12 and the cover 10, therefore extending the life cycle of the membrane itself and of the device 1.

The presence of the step portion 12f also allows a greater stroke of the central portion 12b, such as to obtain an effective introduction of compressed air and restrict flow resistance, while maintaining a low hysteresis.

The presence of the sloped portion 12e, in particular the concavity of this, allows increasing the free stroke of the membrane 12 and lengthens, that is, the horizontal line of the opening curve O shown in figure 7.

It has in fact been ascertained how the described invention achieves the proposed objects.

## Claims

1. Valve device (1) for the cleaning of industrial filters, comprising:
- a body (2) having at least an inlet opening (3) for compressed air and at least an outlet opening (4) for said compressed air;
- at least a membrane (12) of an elastically deformable material housed inside said body (2), having at least a perimeter portion (12a) associated integral with said body (2) and at least a central portion (12b) moving between a closing position, in which it is arranged to sealingly close a transit mouth (7) and a maximum opening position, in which it is arranged spaced from said transit mouth (7);
- actuator means operatively associated with said membrane (12) and suitable for moving said central portion (12b) between the closing position and the maximum opening position along a substantially straight movement axis (A);
whereby said membrane (12) comprises:
- in the proximity of at least a section of said perimeter portion (12a), at least a protruding portion (12d) suitable for squeezing itself against the inner surface of said body (2) and for accumulating elastic energy during the movement of said central portion (12b) from the closing position to the maximum opening position, and suitable for giving back said elastic energy in the form of a thrust during the movement of said central portion (12b) from the maximum opening position to the closing position;
- at least a flexible sloped portion (12e) which extends from said central portion (12b) towards said perimeter portion (12a), which is substantially truncated-cone shaped and extends along the entire perimeter of said central portion (12b) and which is suitable for bending during the movement of said central portion (12b) from said closing position to said maximum opening position;
- at least a flexible step portion (12f) which connects said sloped portion (12e) to said perimeter portion (12a) and which is suitable for bending during the movement of said central portion (12b) from said closing position to said maximum opening position;
- wherein, when said central portion (12b) is in the closing position, the angle defined between said step portion (12f) and said movement axis (A) is less than the angle defined between said sloped portion (12e) and said movement axis (A).

2. Device (1) according to the claim 1, **characterised by** the fact that said membrane (12) has a substantially disc-shaped conformation and comprises a first face turned towards said transit mouth (7) and a second face substantially opposite said transit mouth (7).

3. Device (1) according to the claim 1, **characterised by** the fact that said protruding portion (12d) extends along the entire perimeter of said membrane (12).

4. Device (1) according to the claim 1, **characterised by** the fact that, with said central portion (12b) in the closing position, said protruding portion (12d) extends along said perimeter portion (12a), in the proximity of the inner surface of said body (2), from a face of said membrane (12) substantially opposite said transit mouth (7).

5. Device (1) according to the claim 1, **characterised by** the fact that said protruding portion (12d) has a substantially fin-shaped crosswise section.

6. Device (1) according to claim 3, **characterised by** the fact that, when said central portion (12b) is in the closing position, the angle defined between said sloped portion (12e) and said movement axis (A) is between 65° and 85°.

7. Device (1) according to the claim 2, **characterised by** the fact that said sloped portion (12e) is substantially concave, with the concavity substantially turned on the opposite side with respect to said transit mouth (7).

8. Device (1) according to the claim 1, **characterised by** the fact that said step portion (12f) extends along the entire perimeter of said sloped portion (12e).

9. Device (1) according to the claim 1, **characterised by** the fact that, when said central portion (12b) is in the closing position, the angle defined between said step portion (12f) and said sloped portion (12e) is between 110° and 130°.

10. Device (1) according to the claim 1, **characterised by** the fact that said membrane (12) is obtained by moulding a thermoplastic material.

## Patentansprüche

1. Ventilvorrichtung (1) zur Reinigung von Industriefiltem, umfassend:
- einen Körper (2) mit zumindest einer Einlassöffnung (3) für Druckluft und zumindest einer Auslassöffnung (4) für die Druckluft,
- zumindest eine Membran (12) aus einem elastisch verformbaren Material, die in dem Körper (2) angeordnet ist, mit zumindest einem Umfangsbereich (12a), der einstückig mit dem Körper (2) verbunden ist, sowie zumindest einem Mittelbereich (12b), der beweglich ist zwischen einer Schließstellung, in der dieser so angeordnet ist, dass eine Durchgangsmündung (7) dicht verschlossen ist, und einer maximalen Öffnungsstellung, in der dieser von der Durchgangsmündung (7) beabstandet ist,
- Stellmittel, die mit der Membran (12) in Wirkverbindung stehen und zur Bewegung des Mittelbereichs (12b) zwischen der Schließstellung und der maximalen Öffnungsstellung entlang einer im Wesentlichen geraden Bewegungsachse (A) dienen,
wobei die Membran (12) umfasst:
- zumindest einen Vorsprung (12b) in der Nähe zumindest eines Abschnitts des Umfangsbereichs (12a), wobei der Vorsprung (12b) gegen die Innenfläche des Körpers (2) pressbar ist und zur Speicherung von elastischer Energie während der Bewegung des Mittelbereichs (12b) von der Schließstellung in die maximale Öffnungsstellung sowie zur Abgabe der elastischen Energie in Form eines Schubs während der Bewegung des Mittelbereichs (12b) von der maximalen Öffnungsstellung in die Schließstellung dient,
- zumindest einen flexiblen Neigungsbereich (12e), der sich von dem Mittelbereich (12b) in Richtung des Umfangsbereichs (12a) erstreckt, im Wesentlichen kegelstumpfförmig ist und sich entlang des gesamten Umfangs des Mittelbereichs (12b) erstreckt und während der Bewegung des Mittelbereichs (12b) von der Schließstellung in die maximale Öffnungsstellung verbiegbar ist,
- zumindest einen flexiblen Stufenbereich (12f), der den Neigungsbereich (12e) mit dem Umfangsbereich (12a) verbindet und während der Bewegung des Mittelbereichs (12b) von der Schließstellung in die maximale Öffnungsstellung verbiegbar ist,
- wobei, wenn sich der Mittelbereich (12b) in der Schließstellung befindet, der zwischen dem Stufenbereich (12f) und der Bewegungsachse (A) gebildete Winkel kleiner ist als der zwischen dem Neigungsbereich (12e) und der Bewegungsachse (A) gebildete Winkel.

2. Vorrichtung (1) gemäß Anspruch 1, **dadurch gekennzeichnet, dass** die Membran (12) eine im Wesentlichen scheibenförmige Gestalt aufweist und eine erste Seite umfasst, die der Durchgangsmündung (7) zugewandt ist, sowie eine zweite Seite, die der Durchgangsöffnung (7) im Wesentlichen gegenüber liegt.

3. Vorrichtung (1) gemäß Anspruch 1, **dadurch gekennzeichnet, dass** sich der Vorsprung (12d) entlang des gesamten Umfangs der Membran (12) erstreckt.

4. Vorrichtung (1) gemäß Anspruch 1, **dadurch gekennzeichnet, dass** wenn sich der Mittelbereich (12b) in der Schließstellung befindet, der Vorsprung (12d) sich entlang des Umfangsbereichs (12a) in der Nähe der Innenfläche des Körpers (2) von einer Seite der Membran (12) aus erstreckt, die der Durchgangsmündung (7) im Wesentlichen gegenüber liegt.

5. Vorrichtung (1) gemäß Anspruch 1, **dadurch gekennzeichnet, dass** der Vorsprung (12d) einen im Wesentlichen flügelförmigen Querschnitt aufweist.

6. Vorrichtung (1) gemäß Anspruch 3, **dadurch gekennzeichnet, dass** wenn sich der Mittelbereich (12b) in der Schließstellung befindet, der zwischen dem Neigungsbereich (12e) und der Bewegungsachse (A) gebildete Winkel zwischen 65° und 85° beträgt.

7. Vorrichtung (1) gemäß Anspruch 2, **dadurch gekennzeichnet, dass** der Neigungsbereich (12e) im Wesentlichen konkav ist, wobei die Konkavität im Wesentlichen der gegenüberliegenden Seite in Bezug auf die Durchgangsmündung (7) zugewandt ist.

8. Vorrichtung (1) gemäß Anspruch 1, **dadurch gekennzeichnet, dass** sich der Stufenbereich (12f) entlang des gesamten Umfangs des Neigungsbereichs (12e) erstreckt.

9. Vorrichtung (1) gemäß Anspruch 1, **dadurch gekennzeichnet, dass** wenn sich der Mittelbereich (12b) in der Schließstellung befindet, der zwischen dem Stufenbereich (12f) und dem Neigungsbereich (12e) gebildete Winkel zwischen 110° und 130° beträgt.

10. Vorrichtung (1) gemäß Anspruch 1, **dadurch gekennzeichnet, dass** die Membran (12) durch Formung eines thermoplastischen Materials gebildet ist.

## Revendications

1. Dispositif à valve (1) pour le nettoyage de filtres industriels, comprenant :
- un corps (2) muni d'au moins une ouverture d'entrée (3) pour de l'air comprimé et d'au moins une ouverture de sortie (4) pour ledit air comprimé ;
- au moins une membrane (12) en matériau élastiquement déformable logée à l'intérieur dudit corps (2), munie d'au moins une portion de périmètre (12a) associée solidaire dudit corps (2) et d'au moins une portion centrale (12b) se déplaçant entre une position de fermeture, dans laquelle elle est agencée pour fermer de manière étanche une bouche de transit (7) et une position d'ouverture maximale, dans laquelle elle est agencée écartée de ladite bouche de transit (7) ;
- des moyens d'actionnement fonctionnellement associés à ladite membrane (12) et aptes à déplacer ladite portion centrale (12b) entre la position de fermeture et la position d'ouverture maximale selon un axe de déplacement sensiblement rectiligne (A) ;
dans lequel
ladite membrane (12) comprend :
- à proximité d'au moins une section de ladite portion de périmètre (12a), au moins une portion en saillie (12d) apte à se comprimer contre la surface intérieure dudit corps (2) et à accumuler de l'énergie élastique lors du déplacement de ladite portion centrale (12b) de la position de fermeture à la position d'ouverture maximale, et apte à rendre ladite énergie élastique sous la forme d'une poussée lors du déplacement de ladite portion centrale (12b) de la position d'ouverture maximale à la position de fermeture ;
- au moins une portion souple inclinée (12e) qui s'étend à partir de ladite portion centrale (12b) vers ladite portion de périmètre (12a), qui est sensiblement de forme tronconique et s'étend sur tout le périmètre de ladite portion centrale (12b) et qui est apte à se plier lors du déplacement de ladite portion centrale (12b) de ladite position de fermeture à ladite position d'ouverture maximale ;
- au moins une portion souple à épaulement (12f) qui relie ladite portion inclinée (12e) à ladite portion de périmètre (12a) et qui est apte à se plier lors du déplacement de ladite portion centrale (12b) de ladite position de fermeture à ladite position d'ouverture maximale ;
- dans laquelle, lorsque ladite portion centrale (12b) est en position de fermeture, l'angle défini entre ladite portion à épaulement (12f) et ledit axe de déplacement (A) est inférieur à l'angle défini entre ladite portion inclinée (12e) et ledit axe de déplacement (A).

2. Dispositif (1) selon la revendication 1, **caractérisé en ce que** ladite membrane (12) présente une conformation sensiblement en forme de disque et comprend une première face orientée vers ladite bouche de transit (7) et une seconde face sensiblement opposée à ladite bouche de transit (7).

3. Dispositif (1) selon la revendication 1, **caractérisé en ce que** ladite portion en saillie (12d) s'étend surtout le périmètre de ladite membrane (12).

4. Dispositif (1) selon la revendication 1, **caractérisé en ce que**, lorsque ladite portion centrale (12b) se trouve en position de fermeture, ladite portion en saillie (12d) s'étend le long de ladite portion de périmètre (12a), à proximité de la surface intérieure dudit corps (2), à partir d'une face de ladite membrane (12) sensiblement opposée à ladite bouche de transit (7).

5. Dispositif (1) selon la revendication 1, **caractérisé en ce que** ladite portion en saillie (12d) présente une section transversale sensiblement en forme d'ailette.

6. Dispositif (1) selon la revendication 3, **caractérisé en ce que**, lorsque ladite portion centrale (12b) est en position de fermeture, l'angle défini entre ladite portion inclinée (12e) et ledit axe de déplacement (A) est entre 65° et 85°.

7. Dispositif (1) selon la revendication 2, **caractérisé en ce que** ladite portion inclinée (12e) est sensiblement concave, la concavité étant sensiblement orientée du côté opposé par rapport à ladite bouche de transit (7).

8. Dispositif (1) selon la revendication 1, **caractérisé en ce que** ladite portion à épaulement (12f) s'étend sur tout le périmètre de ladite portion inclinée (12e).

9. Dispositif (1) selon la revendication 1, **caractérisé en ce que**, lorsque ladite portion centrale (12b) est en position de fermeture, l'angle défini entre ladite portion à épaulement (12f) et ladite portion inclinée (12e) est entre 110° et 130°.

10. Dispositif (1) selon la revendication 1, **caractérisé en ce que** ladite membrane (12) est obtenue par moulage d'un matériau thermoplastique.
